# EUROPÄISCHE PATENTSCHRIFT

(11) **EP 3 542 906 B1**
(45) Veröffentlichungstag und Bekanntmachung des Hinweises auf die Patenterteilung: **01.12.2021**
(21) Anmeldenummer: 19401013.8
(22) Anmeldetag: 08.03.2019
(51) Int. Cl.: B05B 1/16, B05B 1/08, A01M 7/00

(54) **FELDSPRITZE MIT DÜSENANORDNUNGEN**
FIELD SPRAYER WITH NOZZLE ASSEMBLIES
PULVÉRISATEUR AGRICOLE AVEC DES DISPOSITIFS DE BUSE

(30) Priorität: 19.03.2018 DE 102018106334
(43) Veröffentlichungstag der Anmeldung: 25.09.2019
(73) Patentinhaber: Amazonen-Werke H. Dreyer SE & Co. KG, 49205 Hasbergen (DE); Rometron B.V., 7221 CJ Steenderen (NL)
(72) Erfinder: Austermann, Stefan, 48291 Telgte (DE); Rahe, Florian, 49504 Lotte (DE); Dembeck, Achim, 49134 Wallenhorst (DE); Hilbert, Florenz, 48282 Emsdetten (DE); Kool, Fred, 8162 RN Epe (NL); de Jonge, Roel, 6981AL Doesburg (NL)

(56) Entgegenhaltungen:
- WO-A1-2016/161079
- DE-A1-102004 056 867
- US-A- 4 105 050

## Beschreibung

Die Erfindung betrifft eine Feldspritze mit einem Verteilergestänge und mehreren daran befestigten Düsenanordnungen gemäß Oberbegriff des Anspruchs 1.

Feldspritzen umfassen bekanntermaßen quer zur Fahrtrichtung ausklappbare Verteilergestänge mit einer Vielzahl von Spritzdüsen zum Ausbringen eines Spritzmittels auf landwirtschaftlichen Anbauflächen. Die Spritzdüsen sind Bestandteile von am Verteilergestänge in geeigneten Abständen zueinander angeordneten Düsenanordnungen mit zentral schaltbaren Ventilen, die zunehmend nach dem bekannten Prinzip der Pulsweitenmodulation zur Einstellung der Durchflussrate arbeiten.

Die einzelnen Düsenanordnungen weisen in der Regel mehrere Spritzdüsen auf, die dem Ventil wahlweise zugeschaltet werden können. Es ist dann üblich, vor jeder Spritzdüse einen Spritzmittelfilter anzuordnen, der Feststoffe im Spritzmittel, beispielsweise Verunreinigungen, zurückhalten soll.

Es hat sich insbesondere bei höheren Modulationsfrequenzen von etwa 20-30 Hz und/oder bei häufigem und/oder kurzzeitigem Zuschalten/Wegschalten einzelner Düsen als nachteilig herausgestellt, dass sich am Spritzmittelfilter Luftblasen ausbilden können, beispielsweise am Eingang zu einer den jeweiligen Spritzmittelfilter aufnehmenden Kavität. Die kompressiblen Luftblasen wirken dann als Puffervolumen und können den Druckaufbau an der Spritzdüse so beeinträchtigen, dass diese nicht den gewünschten Spritzkegel ausstößt. Statt in Form harter gepulster Spritzstrahlen fließt das Spritzmittel dann mit vergleichsweise geringer Geschwindigkeit und näherungsweise kontinuierlich aus der Spritzdüse. Der zur optimalen Verteilung des Spritzmittels erforderliche Spritzkegel kann sich nicht aufbauen.

Diese Problematik wird noch dadurch verstärkt, dass die Spritzmittelfilter bei bestimmten Spritzmitteln und/oder bei sehr guter Wasserqualität nicht benötigt werden und dann der Einfachheit halber oder aus Kostengründen auch weggelassen werden. Die unbestückte Kavität bietet dann zusätzlich Gelegenheit zur Ausbildung störender Luftblasen. Dies kann auch der Fall sein, wenn Spritzmittelfilter bei sehr schlechter Wasserqualität während des Arbeitsbetriebs vorzeitig verstopfen und daher unter Umständen entfernt oder von vorneherein weggelassen werden.

Aufgrund der Ausrichtung der Spritzdüsen nach unten hin und der vergleichsweise geringen Fließgeschwindigkeit des Spritzmittels, ist eine Entlüftung der nach oben führenden Leitungen samt der Kavität des Spritzmittelfilters zudem schwierig zu bewerkstelligen.

Ferner sind aus der DE 10 2004 056 867 A1 Reduzierstücke in Form von Stopfen bekannt, die innerhalb der Düsenanordnung, insbesondere zwischen einem Ventil der Düsenanordnung und einem Anschluss für eine Spritzdüse, einbringbar sind. Nachteilig hierbei ist, dass entlang des Spritzmittelkanals, insbesondere im Bereich des Anschlusses und der Spritzdüse, weitere Kavitäten bestehen bleiben, die zur Ausbildung störender Luftblasen führen. Darüber hinaus weisen die hierbei beschriebenen Reduzierstücke einen zur Kavität nur geringfügig beschränkten Leitungsquerschnitt auf, so dass hierbei weiterhin Luftblasen, insbesondere bei der Verwendung von pulsweitenmodulierten Ventilen, entstehen können und somit die Ausgabe von Spritzmittel negativ beeinflussen.

Es besteht daher zunehmend Bedarf zur Abmilderung oder Beseitigung der oben genannten Problematik an Düsenanordnungen für Feldspritzen.

Die gestellte Aufgabe wird mit einer Düsenanordnung für eine Feldspritze nach Anspruch 1 gelöst. Demnach umfasst die Düsenanordnung einen Düsenstock mit einem Ventil zur pulsweitenmodulierten Freigabe eines Spritzmittels sowie daran anschließend einen Spritzmittelkanal und wenigstens einen Anschluss für eine Spritzdüse, wobei im Anschluss eine Kavität zum Einsetzen eines Spritzmittelfilters ausgebildet ist. Erfindungsgemäß umfasst die Düsenanordnung ein anstelle des Spritzmittelfilters in der Kavität vorhandenes Reduzierstück mit einem gegenüber der Kavität reduzierten Leitungsquerschnitt für das Spritzmittel.

Dadurch kann der Entstehung von Luftblasen zwischen dem Ventil und dem Ausgang des Anschlusses entgegengewirkt werden. Folglich lassen sich kompressible Puffervolumina zwischen Ventil und Spritzdüse zumindest so weit reduzieren, dass eine ordnungsgemäße Pulsweitenmodulation des Spritzkegels gegeben ist.

Der Düsenstock sitzt an einer Abzweigung von einer am Verteilergestänge entlang laufenden Hauptleitung für das Spritzmittel.

Die Ansteuerung zur Pulsweitenmodulation des Ventils erfolgt auf bekannte Weise zentral von einer Feldspritze und/oder einem zugeordneten Schlepper.

Erfindungsgemäß beträgt der Flächeninhalt des Leitungsquerschnitts des Reduzierstücks, insbesondere im Mittel, 5-50 mm², insbesondere 10-30 mm². Es verläuft dann vorzugsweise ein entsprechend bemessener zentraler Kanal durch das Reduzierstück. Zur Ermittlung eines mittleren Leitungsquerschnitts könnte das Volumen des Kanals durch Integration über seine Länge berechnet und durch diese dividiert werden.

Das Spritzmittel fließt dann zudem so schnell, dass gegebenenfalls vorhandene Luftblasen mitgerissen und entfernt werden. Der Kanal im Reduzierstück kann dann als Fortsetzung des Spritzmittelkanals angesehen und entsprechend bei der Berechnung der Strömungsverhältnisse im Düsenstock berücksichtigt werden.

Erfindungsgemäß weist das Reduzierstück ein Außenvolumen auf, das wenigstens 50% oder wenigstens 75%, und insbesondere wenigstens 90%, des Volumens der Kavität beträgt. Dies ermöglicht eine besonders wirksame Vermeidung von Luftblasen zwischen Ventil und dem Anschluss zum Spritzdüse.

Vorzugsweise umfasst das Reduzierstück ferner einen verjüngten Abschnitt zur Verengung eines Übergangsbereichs zwischen Spritzmittelkanal und Kavität. Dort lässt sich dann sowohl die Bildung als auch der Verbleib von Luftblasen trotz des sich dort vergleichsweise stark änderndem Leitungsquerschnitts effektiv verhindern.

Vorzugsweise umfasst die Düsenanordnung ferner einen am Anschluss insbesondere formschlüssig befestigten Sicherungsring, der als ausgangsseitiger Anschlag für das Reduzierstück wirkt. Dadurch lässt sich ein Herausfallen des Reduzierstücks bei der Montage / Demontage einer Spritzdüse vermeiden.

Zusätzlich kann der fest mit dem Reduzierstück verbindbare Sicherungsring die Herausna h-me und/oder Demontage des Reduzierstücks erleichtern. Dazu kann der Sicherungsring beispielsweise mittels eines geeigneten Werkzeugs gegriffen und somit das gesamte Reduzierstück in einfacher Weise aus der Kavität entfernt werden.

Alternativ oder Zusätzlich zu dem Sicherungsring kann das Reduzierstück Demontageelemente aufweisen, die eine Herausnahme und/oder Demontage des Reduzierstücks erleichtern. Als Demontageelemente sind beispielsweise Ösen, Absätze oder Aussparungen an dem Reduzierstück angeordnet, die beispielsweise zum Eingriff von Werkzeugen geeignet sind.

Vorzugsweise ist der Anschluss als Aufnahmestutzen für die Spritzdüse ausgebildet. Die Spritzdüse kann dann auf ergonomische Weise am Anschluss aufgeschraubt werden, beispielsweise mittels Feingewinde oder Bajonettverschluss.

Vorzugsweise umfasst die Düsenanordnung eine am Anschluss angeschlossene Spritzdüse. Die Spritzdüse wird beispielsweise aufgeschraubt und erzeugt dann im Arbeitsbetrieb einen gepulsten Spritzkegel mit einer vom Ventil gesteuert modulierten Pulsweite.

Vorzugsweise umfasst der Düsenstock bezüglich eines ihn tragenden Verteilergestänges ein feststehendes Basiselement mit einem Abschnitt des Spritzmittelkanals sowie ein beweglich gelagertes Umschaltelement mit an den Abschnitt wahlweise anschließbaren Kavitäten für Spritzmittelfilter und Anschlüssen für Spritzdüsen. Folglich können Spritzdüsen mit unterschiedlicher Spritzcharakteristik ohne Montagearbeiten an das Ventil angeschlossen werden. Vorzugsweise ist dann in jeder Kavität ein Reduzierstück vorhanden.

Vorzugsweise ist das Umschaltelement als Drehelement zur Aufnahme von wenigstens drei Spritzdüsen ausgebildet. Dies ermöglicht eine platzsparende Bauweise und einen ergonom i-schen Wechsel zwischen unterschiedlichen Spritzdüsen.

Das Drehelement arbeitet dann beispielsweise nach Art einer Revolvertrommel mit Rastpositionen, an denen der erste Abschnitt des Spritzmittelkanals mit jeweils einer der Kavitäten verbunden ist. Prinzipiell wären aber auch als Schieber ausgebildete Umschaltelemente oder andere Umschaltmechanismen denkbar, sofern sich ein Spritzmittelkanal zwischen dem Ventil und dem damit verbundenen Anschluss für eine Spritzdüse im obigen Sinne definieren lässt.

Die gestellte Aufgabe wird ebenso gelöst von einer Feldspritze mit einem Verteilergestänge und mehreren daran befestigten Düsenanordnungen gemäß wenigstens einer der vorigen Ausführungsformen. Die Feldspritze kann selbstfahrend sein oder von einem Schlepper gezogen und auf bekannte Weise zentral gesteuert werden.

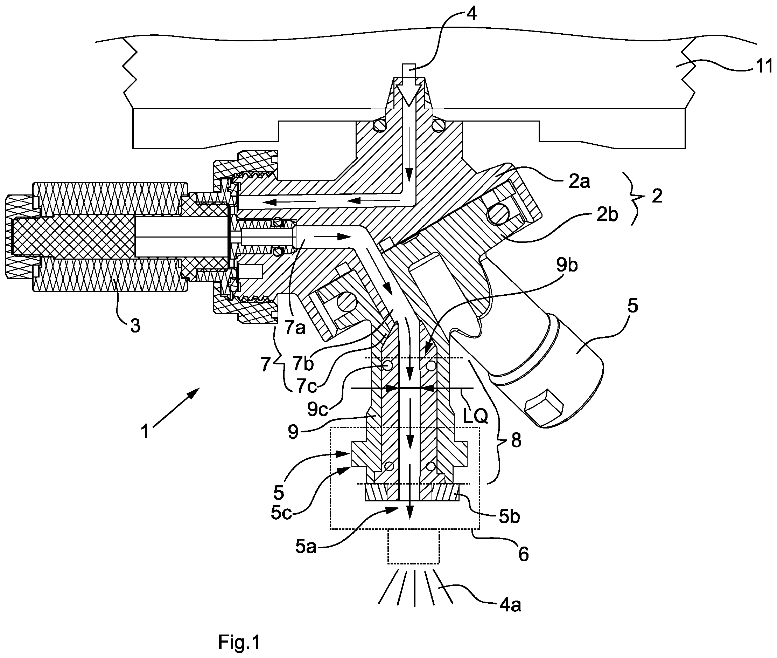

Eine bevorzugte Ausführungsform ist zeichnerisch dargestellt. Die einzige Figur zeigt eine Düsenanordnung an der Hauptleitung eines Verteilergestänges.

Demnach umfasst die Düsenanordnung 1 einen Düsenstock 2 mit einem daran befestigten Ventil 3 zur pulsweitenmodulierten Freigabe eines unter geeignetem Leitungsdruck eingangsseitig am Düsenstock 2 anstehenden Spritzmittels 4. Ferner umfasst der Düsenstock 2 ausgangsseitige Anschlüsse 5 für an sich bekannte Spritzdüsen 6 (nur eine davon schematisch angedeutet) zur Abgabe des Spritzmittels 4 in Form von Spritzkegeln 4a auf eine landwirtschaftliche Anbaufläche.

Das Ventil 3 und je einer der Anschlüsse 5 sind durch einen innerhalb des Düsenstocks 2 verlaufenden Spritzmittelkanal 7 miteinander verbunden. Der Spritzmittelkanal 7 gliedert sich vorzugsweise in einen ersten Abschnitt 7a, der durch ein bezüglich eines zugeordneten Verteilergestänges einer Feldspritze (nicht dargestellt) feststehendes Basiselement 2a des Düsenstocks 2 verläuft, und in einen zweiten Abschnitt 7b, der durch ein demgegenüber bewegliches Umschaltelement 2b des Düsenstocks 2 zu je einem der Anschlüsse 5 führt.

Das Umschaltelement 2b ist vorzugsweise als Drehelement im Sinne einer Revolvertrommel oder dergleichen drehbar in/am Basiselement 2a gelagert und weist mehrere Rastpositionen auf, an denen der erste Abschnitt 7a des Spritzmittelkanals 7 jeweils mit einem der zweiten Abschnitte 7b verbunden ist.

Der Anschluss 5 umfasst eine Kavität 8 zur Aufnahme eines ausgangsseitigen Spritzmittelfilters (nicht dargestellt) mit beispielsweise 12 mm Durchmesser. Erfindungsgemäß befindet sich in der Kavität 8 anstelle des ausgangsseitigen Spritzmittelfilters ein Reduzierstück 9 mit einem vorzugsweise zentralen Kanal 9a für das Spritzmittel 4. Das Reduzierstück 9 ist beispielsweise mit einem am Anschluss 5 formschlüssig befestigten Sicherungsring 5b gegen ein Herausfallen aus der Kavität 8 gesichert.

Der Sicherungsring 5b kann mit dem Reduzierstück 9 fest verbunden sein. Dadurch erleichtert der Sicherungsring 5b die Herausnahme und/oder Demontage des Reduzierstücks 9, indem der Sicherungsring 5b beispielsweise mittels eines geeigneten Werkzeugs gegriffen wird. Somit kann das Reduzierstück 9 an dem Sicherungsring 5b aus der Kavität 8 entfernt werden.

In einer nicht dargestellten Ausführungsform kann das Reduzierstück 9 Demontageelemente aufweisen, die eine Herausnahme und/oder Demontage des Reduzierstücks 9 erleichtern. Dazu können beispielsweise Ösen, Absätze oder Aussparungen an dem Reduzierstück 9 angeordnet, die beispielsweise zum Eingriff von Werkzeugen geeignet sind.

Die Kavität 8 und das Reduzierstück 9 sind vorzugsweise rotationssymmetrisch bezüglich ihrer Längsachsen. Das Reduzierstück 9 nimmt beispielsweise wenigstens 50%, vorzugsweise wenigstens 75% und insbesondere wenigstens 90% des Volumens der Kavität 8 ein.

Die Kavität 8 ist als ein Bereich zu verstehen, der zur Aufnahme eines ausgangsseitigen Spritzmittelfilters konfiguriert ist, insbesondere als zylindrische Ausnehmung im Anschluss 5. Das Volumen des Reduzierstücks 9 ergibt sich dann aus seinen Außenabmessungen in demjenigen Abschnitt, der im eingebauten Zustand innerhalb der Kavität 8 liegt. Die Kavität 8 ist in der Figur als entsprechender Abschnitt des Anschlusses 5 zwischen gestrichelten Linien angegeben.

Der Spritzmittelkanal 7 kann einen sich vom zweiten Abschnitt 7b zur anschließenden Kavität 8 hin weitenden Übergangsabschnitt 7c umfassen. Am Reduzierstück 9 ist dann vorzugsweise ein verjüngter Abschnitt 9b ausgebildet, der in den Übergangsabschnitt 7c des Spritzmittelkanals 7 ragt, diesen verengt und dort der Bildung und/oder dem Anhaften von Luftblasen entgegenwirkt.

Die Anschlüsse 5 sind vorzugsweise als Aufnahmestutzen ausgebildet, an denen sich die Spritzdüsen 6 beispielsweise mittels Bajonettverschluss 5c von unten her aufschrauben lassen. Die Aufnahmestutzen sind vorzugsweise integrale Bestandteile des Umschaltelements 2b.

Der eingangsseitige Spritzmittelfilter 10 schützt gemeinsam nicht nur die an den Anschlüssen 5 befestigten Spritzdüsen 6 gegenüber im Spritzmittel 4 gegebenenfalls vorhandenen Festkörpern oder dergleichen Material sondern auch das Ventil 3, das zur Pulsweitenmod u-lation vergleichsweise filigran aufgebaut und daher gegenüber Festkörpern im Spritzmittel 4 prinzipiell empfindlich ist. Dennoch ist der eingangsseitige Spritzmittelfilter 10 nicht zwingend erforderlich, beispielsweise bei Verwendung geeignet vorgefertigter Spritzmittel 4 ohne feste oder aus anderen Gründen auszufilternde Bestandteile.

Der Flächeninhalt des Leitungsquerschnitts LQ des Kanals 9a im Reduzierstück 9 beträgt vorzugsweise durchgehend 5-50 mm², insbesondere 10-30 mm². Besonders geeignet ist beispielsweise ein zentraler Kanal 9a mit 5-6 mm Durchmesser. Luftblasen können sich darin dann kaum ausbilden und werden, falls dies dennoch nicht vollständig zu vermeiden ist, zuverlässig vom dort vergleichsweise schnell fließende Spritzmittel 4 mitgerissen und ausgespült.

Das eingesetzte Reduzierstück 9 wirkt somit der Bildung und dem Anhaften von Luftblasen zwischen dem Ventil 3 und dem Ausgang 5a des Anschlusses 5 insgesamt entgegen. Eine anderweitige Entlüftung des Spritzmittelkanals 7 und/oder der Kavität 8 ist daher entbehrlich.

Der Leitungsquerschnitt LQ im Reduzierstück 9 ist vorzugsweise rund oder elliptisch. Aber auch andere Querschnittformen, auch seitliche, zur Innenwand der Kavität 8 offene Kanäle für das Spritzmittel 4, könnten prinzipiell im Reduzierstück 9 ausgebildet sein. Es ist jedoch vorteilhaft, die Außenwand des Reduzierstücks 9 gegenüber der Kavität 8 abzudichten, beispielsweise mittels eines am Reduzierstück 9 umlaufenden Dichtungsrings 9c.

Der Spritzmittelkanal 7 und die Kavität 8 sind insgesamt vorzugsweise höchstens 100 mm lang, um Druckverluste zwischen dem Ventil 3 und der jeweils verbundenen Spritzdüse 6 auch mit eingesetztem Reduzierstück 9 auf ein geeignetes Ausmaß zu begrenzen.

Die beschriebene Unterteilung des Düsenstocks 2 in ein eingangsseitiges Basiselement 2a mit dem Ventil 3 und ein demgegenüber bewegliches und insbesondere drehbares Umschaltelement 2b mit mehreren und insbesondere wenigstens drei Anschlüssen 5 ist nicht zwingend erforderlich. Der Düsenstock 2 könnte prinzipiell auch einen einzigen Anschluss 5 für eine Spritzdüse 6 aufweisen. Insbesondere muss dann der Düsenstock 2 kein gegenüber dem feststehenden Basiselement 2a bewegliches Umschaltelement 2b aufweisen.

Generell können Leitungsquerschnitte im Bereich des Spritzmittelkanals 7 und des Reduzierstücks 9 über deren Länge variieren. Gegebenenfalls ist dann ein mittlerer Leitungsquerschnitts LQ für den Kanal 9a im Reduzierstück 9 durch Integration zu berechnen und durch dessen Länge zu dividieren. Ähnliches gilt für die Berechnung von Volumina für das Reduzierstück 9 und die Kavität 8, siehe beispielsweise die unterschiedlichen Durchmesser des Reduzierstücks 9 im Bereich des Ausgangs 5a.

Das Reduzierstück 9 lässt sich vorteilhaft aus einem Kunststoff, wie beispielsweise Polyoxymethylen (POM), spanabhebend oder auch durch andere herkömmliche Verfahren herstellen. Dies begünstigt eine kostengünstige und flexible Ausstattung und gegebenenfalls Nachrüstung von Düsenanordnungen 1 mit Reduzierstücken 9 und/oder mit den Ventilen 3 vorgeschalteten Spritzmittelfiltern 10.

## Patentansprüche

1. Feldspritze mit einem Verteilergestänge und mehreren daran befestigten Düsenanordnungen (1), umfassend jeweils einen Düsenstock (2) mit einem Ventil (3) zur pulsweitenmodulierten Freigabe eines Spritzmittels (4) sowie daran anschließend einen Spritzmittelkanal (7) und wenigstens einen Anschluss (5) für eine Spritzdüse (6), wobei im Anschluss (5) eine Kavität (8) zum Einsetzen eines Spritzmittelfilters ausgebildet ist, wobei die Düsenanordnungen jeweils ein anstelle des Spritzmittelfilters in der Kavität (8) vorhandenes Reduzierstück (9) mit einem gegenüber der Kavität (8) reduzierten Leitungsquerschnitt (LQ) umfassen, **gekennzeichnet dadurch, dass** jeweils der Leitungsquerschnitt (LQ) des Reduzierstücks (9), insbesondere im Mittel, 5-50 mm² beträgt und insbesondere 10-30 mm² und wobei das Reduzierstück (9) jeweils ein Außenvolumen aufweist, das wenigstens 50%, insbesondere wenigstens 75%, des Volumens der Kavität (8) beträgt.

2. Feldspritze nach Anspruch 1, wobei bei den Düsenanordnungen jeweils das Reduzierstück (9) einen verjüngten Abschnitt (9b) zur Verengung eines Übergangsabschnitts (7c) des Spritzmittelkanals (7) zur Kavität (8) hin umfasst.

3. Feldspritze nach wenigstens einem der vorigen Ansprüche, wobei die Düsenanordnungen ferner jeweils einen am Anschluss insbesondere formschlüssig befestigten Sicherungsring (5b) umfassen, der als ausgangsseitiger Anschlag für das Reduzierstück (9) wirkt.

4. Feldspritze nach wenigstens einem der vorigen Ansprüche, wobei bei den Düsenanordnungen jeweils das Reduzierstück (9) Demontageelemente aufweist.

5. Feldspritze nach wenigstens einem der vorigen Ansprüche, wobei bei den Düsenanordnungen jeweils der Anschluss (5) als Aufnahmestutzen für die Spritzdüse (6) ausgebildet ist.

6. Feldspritze nach wenigstens einem der vorigen Ansprüche, wobei die Düsenanordnungen ferner jeweils eine am Anschluss (5) und/oder Sicherungsring (5b) angeschlossene Spritzdüse (6) umfassen.

7. Feldspritze nach wenigstens einem der vorigen Ansprüche, wobei bei den Düsenanordnungen jeweils der Düsenstock (2) bezüglich des ihn tragenden Verteilergestänges ein feststehendes Basiselement (2a) mit einem Abschnitt (7a) des Spritzmittelkanals (7) umfasst sowie ein beweglich gelagertes Umschaltelement (2b) mit an den Abschnitt (7a) wahlweise anschließbaren Kavitäten (8) für Spritzmittelfilter und Anschlüssen (5) für Spritzdüsen.

8. Feldspritze nach Anspruch 7, wobei bei den Düsenanordnungen jeweils das Umschaltelement (2b) als Drehelement zur Aufnahme von wenigstens drei Spritzdüsen (6) ausgebildet ist.

## Claims

1. Field sprayer with a distribution manifold and a plurality of nozzle assemblies (1) attached thereto, each comprising a nozzle holder (2) with a valve (3) for the pulse-width-modulated release of a spray (4) and adjoining this a spray duct (7) and at least one connection (5) for a spray nozzle (6), wherein a cavity (8) for inserting a spray filter is formed in the connection (5), wherein the nozzle assemblies each comprise a reducing piece (9) which is present in the cavity instead of the spray filter and which has a line cross-section (LQ) which is reduced in comparison with to the cavity (8), **characterized in that** in each case the line cross-section (LQ) of the reducing piece (9), in particular on average, is 5-50 mm² and in particular 10-30 mm² and wherein the reducing piece (9) in each case has an external volume that is at least 50%, in particular at least 75%, of the volume of the cavity (8).

2. Field sprayer according to Claim 1, wherein in the nozzle assemblies the reducing piece (9) in each case comprises a tapered section (9b) for narrowing a transition section (7c) of the spray duct (7) toward the cavity (8).

3. Field sprayer according to at least one of the preceding claims, wherein the nozzle assemblies in each case further comprise a retaining ring (5b) fastened to the connection, in particular in a positive-locking manner, which retaining ring acts as an outlet-end stop for the reducing piece (9).

4. Field sprayer according to at least one of the preceding claims, wherein in the nozzle assemblies the reducing piece (9) in each case has disassembly elements.

5. Field sprayer according to at least one of the preceding claims, wherein in the nozzle assemblies the connection (5) in each case is designed as a receiving socket for the spray nozzle (6).

6. Field sprayer according to at least one of the preceding claims, wherein the nozzle assemblies further comprise a spray nozzle (6) connected to the connection (5) and/or retaining ring (5b).

7. Field sprayer according to at least one of the preceding claims, wherein in the nozzle assemblies the nozzle holder (2) in each case comprises, with respect to the distribution manifold carrying it, a fixed base element (2a) with a section (7a) of the spray duct (7) and also a movably mounted switching element (2b) with cavities (8) for spray filters, said cavities being selectively connectable to the section (7a), and with connections (5) for spray nozzles.

8. Field sprayer according to Claim 7, wherein in the nozzle assemblies the switching element (2b) is in each case designed as a rotation element for receiving at least three spray nozzles (6).

## Revendications

1. Pulvérisateur agricole comprenant une rampe distributrice et plusieurs dispositifs de buse (1) fixés sur celle-ci, comprenant respectivement un porte-buse (2) avec une soupape (3) pour la libération modulée en largeur d'impulsion d'un agent de pulvérisation (4) ainsi qu'un canal d'agent de pulvérisation (7) qui est raccordé à celle-ci et au moins un raccord (5) pour une buse de pulvérisation (6), dans lequel une cavité (8) est formée dans le raccord (5) pour l'introduction d'un filtre d'agent de pulvérisation, dans lequel les dispositifs de buse comprennent respectivement un réducteur (9) disposé à la place du filtre d'agent de pulvérisation dans la cavité avec une section transversale de conduite (LQ) réduite par rapport à la cavité (8), **caractérisé en ce que** respectivement, la section transversale de conduite (LQ) du réducteur (9), en particulier au milieu, est de 5-50 mm² et en particulier de 10-30 mm² et dans lequel le réducteur (9) présente respectivement un volume externe, qui est au moins de 50 %, en particulier au moins de 75 %, du volume de la cavité (8).

2. Pulvérisateur agricole selon la revendication 1, dans lequel, dans les dispositifs de buse, le réducteur (9) respectif comprend une section conique (9b) pour le rétrécissement d'une section de transition (7c) du canal d'agent de pulvérisation (7) vers la cavité (8).

3. Pulvérisateur agricole selon au moins l'une des revendications précédentes, dans lequel les dispositifs de buse comprennent en outre respectivement une bague de verrouillage (5b), fixée au raccord en particulier par complémentarité de forme, laquelle agit comme butée côté sortie pour le réducteur (9).

4. Pulvérisateur agricole selon au moins l'une des revendications précédentes, dans lequel, dans les dispositifs de buse, le réducteur (9) présente respectivement des éléments de démontage.

5. Pulvérisateur agricole selon au moins l'une des revendications précédentes, dans lequel, dans les dispositifs de buse, le raccord (5) est respectivement formé comme douilles de réception pour les buses de pulvérisation (6).

6. Pulvérisateur agricole selon au moins l'une des revendications précédentes, dans lequel les dispositifs de buse comprennent en outre respectivement une buse de pulvérisation (6) raccordée sur le raccord (5) et/ou sur la bague de verrouillage (5b).

7. Pulvérisateur agricole selon au moins l'une des revendications précédentes, dans lequel, dans les dispositifs de buse, le porte-buse (2) comprend respectivement un élément de base (2a) fixé avec une section (7a) du canal d'agent de pulvérisation (7) par rapport à la rampe distributrice qui le porte, ainsi qu'un élément de commutation (2b) agencé mobile avec des cavités (8) pouvant être raccordées sélectivement avec la section (7a) pour le filtre d'agent de pulvérisation et des raccords (5) pour les buses de pulvérisation.

8. Pulvérisateur agricole selon la revendication 7, dans lequel, dans les dispositifs de buse, l'élément de commutation (2b) est respectivement formé comme un élément rotatif pour la réception d'au moins trois buses de pulvérisation (6).
